# EUROPEAN PATENT SPECIFICATION

(11) **EP 2 574 420 B1**
(45) Date of publication and mention of the grant of the patent: **22.10.2014**
(21) Application number: 11183227.5
(22) Date of filing: 29.09.2011
(51) Int. Cl.: B23K 1/00, C22C 38/02, C22C 38/18, B23K 35/30

(54) **Iron-based brazing composition and method of joining heat transfer plates**
Lötzusammensetzung auf Eisenbasis und Verfahren zum Verbinden von Wärmeübertragungsplatten
Composition de brasage à base de fer et procédé d'union de plaques de transfert de chaleur

(43) Date of publication of application: 03.04.2013
(73) Proprietor: Alfa Laval Corporate AB, 221 00 Lund (SE)
(72) Inventor: Dahlberg, Per-Olof, 226 54 Lund (SE)
(74) Representative: Alfa Laval Attorneys

(56) References cited:
- EP-A1- 2 272 619
- WO-A1-02/38327
- WO-A1-02/090032
- JP-A- 60 082 265
- Anoymous: "Solvent Green 7", Guidechem , 1 January 2011 (2011-01-01), XP002671522, Retrieved from the Internet: URL:http://www.guidechem.com/dictionary/en /6358-69-6.html [retrieved on 2012-02-14]

## Description

### Technical field

The invention relates to an iron-based brazing composition and to a method of joining heat transfer plates with the iron-based brazing composition.

### Background

Today a number of techniques exist for joining heat transfer plates of a plate heat exchanger. One of these techniques includes joining iron-based heat transfer plates by brazing, where each plate is provided with port holes and a press pattern of elevations and depressions over a heat exchanging area of the plate. When plates are arranged in a stack contacts between elevations and depressions on adjacent plates are obtained. A brazing material is disposed in between every adjacent heat transfer plate and the plates are heated such that the brazing material melts with the result that the plates are brazed together at their points of contact. The brazing may take place under vacuum or in presence of an inert or active shielding gas, such as nitrogen, hydrogen, helium or argon or combinations thereof.

The brazing material between the heat transfer plates is often arranged as sheets or foils, or arranged in from of a paint-like substance where a binder causes the brazing material to adhere to a plate that shall be brazed to another plate. If a binder is used, the plates are typically heated in steps such that the binder is vaporized before the brazing material reaches its brazing temperature.

In order to obtain a joint by brazing it is required that the brazing material properly wets (comes into contact with) the surfaces and contact points of the plates when the plates are brazed together. This is important in order to obtain a sufficient bonding strength between the plates and to prevent brittle phases or cracks that otherwise might cause sites for fatigue failure, corrosion, leaching of alloy elements etc.

Proper wetting is thus crucial and is affected by factors like the amount of brazing material arranged between the plates, where and how the brazing material is arranged and by what type of brazing material is used. These factors interact and the method by which one type of brazing material is applied is not always suitable for another type of brazing material.

To obtain an optimal result methods are often optimized in respect of what type of brazing material is used. One comparatively new brazing material used for brazing plate heat exchangers is the iron-based brazing material. Iron-based brazing materials are disclosed in patent documents EP2272619 and US2011020166A1.

WO02/38327 discloses a brazing material comprising at least 50 % Fe and includes 0-30 % Cr, preferably 9-30 % Cr, maximum 5 % Mn, 0-25 % Ni and maximum 7 % Mo, 0-1 % N and 6-20 % Si, all stated in weight percent, which Si-addition lowers the liquidus temperature, that is the temperature when the brazing material is completely melted and the brazing composition comprises a binder.

Even though the materials disclosed in these documents successfully accomplish brazing, it is believed that iron-based brazing compositions as well as related brazing methods may be further improved in sense of providing durable plate heat exchangers with a consistent quality.

### Summary

It is an object of the invention to at least partly improve the above-identified techniques and prior art. In particular, it is an object to provide an iron-based brazing composition and a related method that accomplish more durable products, in particular more durable plate heat exchangers where a predetermined quality consistently may be expected.

To solve these objects an iron-based brazing composition is provided. The iron-based brazing composition comprises an alloy which contains i) 9 - 30 wt% chromium (Cr), ii) 0 - 5.0 wt% manganese (Mn), iii) 0 - 30 wt% nickel (Ni), iv) 0 - 12 wt% molybdenum (Mo), v) 0 - 1 wt% nitrogen (N), vi) 1 - 20 wt% silicone (Si) in an amount effective to lower a temperature at which brazing takes place, vii) 0 - 4 wt% copper (Cu), viii) optionally 0 - 2.5 wt% of one or more of elements selected from a group consisting of carbon (C), vanadium (V), titanium (Ti), tungsten (W), aluminum (Al), niobium (Nb), hafnium (Hf) and tantalum (Ta), ix) 0 - 2 wt% boron (B), or 0 - 15 wt% phosphorus (P), and x) iron (Fe) in an amount that balances the alloy, and small inevitable amounts of contaminating elements such as sulphur (S) or oxygen (O). The iron-based brazing composition further comprises a binder system for allowing the brazing composition to be applied on a surface by ejection, and a fluorescent substance, for allowing verification of a pattern of applied iron-based brazing composition.

The iron-based brazing composition is advantageous in that it e.g. enables a new method of joining heat transfer plates. This is due to the binder composition and in particular due to the fluorescent substance, where the binder composition allows accurate ejection of the brazing composition and where the fluorescent substance provides e.g. for a verification in respect of whether the brazing composition was properly ejected or not. Proper ejection of brazing composition is highly relevant, as it affects the quality the brazed product.

In one embodiment, for the alloy, Cr is within the range of 15 - 30 wt%, Ni is within the range of 9 - 20 wt%, Si is within the range of 6 - 20 wt% and B is within the range of 0.1 - 1.5 wt%. Alternatively, P is within the range of 2.5 - 15.0 wt%, while the amount of B is neglectable or nil.

In one embodiment, for the alloy, Cr is within the range of 15 - 30 wt%, Ni is within the range of 9 - 20 wt%, Si is within the range of 1 - 7, B is within the range of 0 - 0.2 wt%, and P is within the range of 1 - 7 wt%.

In one embodiment, for the alloy, Cr is within the range of 15 - 30 wt%, Ni is within the range of 15 - 30 wt%, Mo is within the range of 2 - 12 wt%, Cu is within the range of 0.1 - 4.0 wt%, Si is within the range of 8 - 12 wt% and B is within the range of 0.1 - 1.5 wt%. Alternatively, Si is within the range of 2.5 - 9.0 wt% and P is within the range of 2.5 - 9.0 wt%, while the amount of B is neglectable or nil.

The fluorescent substance may comprise an aromatic sulphonic acid or salt. In detail, the fluorescent substance may comprise trisodium 8-hydroxypyrene-1,3,6-trisulfonate.

The binder system may comprise water and any one of 1-5 wt% isopropanol, 1-10 wt% butyl glycol and 1-10 wt% ethanol.

According to another aspect of the invention a method of joining heat transfer plates is provided. The heat transfer plates are joined by brazing with the above described iron-based brazing composition. The method comprises iteratively, until a predetermined number of heat transfer plates have been stacked: ejecting the brazing composition in a predetermined pattern on a heat transfer plate; illuminating the ejected composition with light from a light source, such that the fluorescent substance in the composition emits fluorescent light in response to the illumination; registering with a sensor a pattern of the fluorescent light emitted by the fluorescent substance in the composition; comparing he registered pattern with a reference pattern; and stacking a further heat transfer plate on top of the heat transfer plate on which the composition was ejected. When the predetermined number of heat transfer plates have been stacked, the stacked heat transfer plates are heated to a temperature of at least 1000 °C, such that the stacked heat transfer plates are joined by brazing.

The method is advantageous in that the ejection allows accurate application of the brazing composition. Another advantage lies in that the comparison of the registered pattern with the reference pattern provides for a verification in respect of whether the brazing composition was properly ejected on the plate or not. If the comparison shows an undesired deviation, any suitable action may be taken, such as recalibration of any equipment used for carrying out the method. This enables a manufacturer to guarantee that a predetermined quality is met for a number of brazed heat transfer plates.

The method may comprise, prior heating the stacked heat transfer plates, moving the stacked heat transfer plates to an oven.

The method may comprise, during the iteration that is performed until the predetermined number of heat transfer plates have been stacked, lowering the stacked heat transfer plates in a direction that is parallel to a direction by which the heat transfer plates are stacked.

The method may comprise providing a support for holding a stack of heat transfer plates, wherein the support is used as a reference point when comparing the registered pattern with the reference pattern.

The registering of the pattern of the fluorescent light may comprise registering a planar extension of the light emitted from the fluorescent substance. Optionally or alternatively, the registering of the pattern of the fluorescent light may comprise registering an intensity of the light emitted from the fluorescent substance.

The ejecting of the brazing composition may comprise any one of i) ejecting brazing composition in form of a loop at a periphery of the heat transfer plate, ii) ejecting brazing composition as strings between two long sides of the heat transfer plate, iii), ejecting brazing composition around four ports of at least one heat transfer plate, and iv) ejecting brazing composition between an inlet port for a first fluid and an outlet port for a second fluid, where the inlet port and outlet port are formed in a heat transfer plate of the stacked heat transfer plates.

According to one embodiment the ejecting of the brazing composition around the four ports is performed only for a last heat transfer plate on which the brazing composition is ejected. According to another embodiment the ejecting of the brazing composition between the inlet port for a first fluid and the outlet port for a second fluid is performed for all heat transfer plates but for a last heat transfer plate on which the brazing composition is ejected.

Still other objectives, features, aspects and advantages of the invention will appear from the following detailed description as well as from the drawings.

### Drawings

Embodiments of the invention will now be described, by way of example, with reference to the accompanying schematic drawings, in which
Fig. 1 illustrates an embodiment of a system for carrying out a method of joining heat transfer plates,
Fig. 2 is a top view of a heat transfer plate on which an iron-based brazing composition is ejected,
Fig. 3 illustrates an embodiment of a method of joining heat transfer plates, which may be performed by the equipment of Fig. 1, and
Fig. 4 is a perspective view of a heat exchanger that is made of heat transfer plates like the one of Fig. 2.

### Detailed description

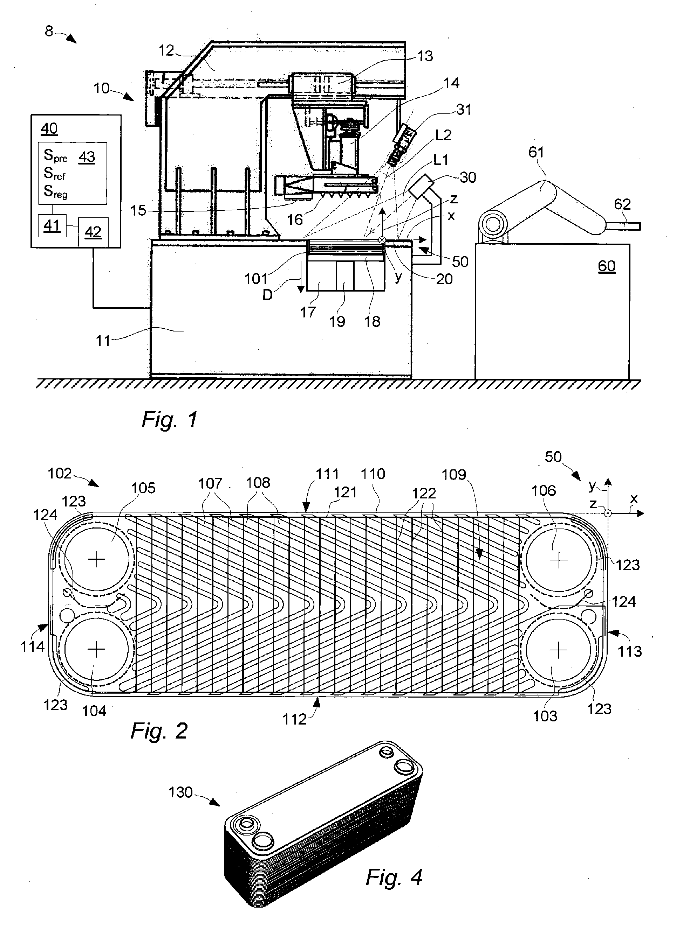

With reference to Fig. 1 an embodiment a system 8 that is used for carrying out a method of joining heat transfer plates is shown. The system 8 comprises a CNC (computer numerical control) machine 10, a brazing oven 60 and a control unit 40. The control unit 40 is connected to the CNC machine 10, connected (not shown) to the brazing oven 60 and is arranged to control both the CNC machine 10 and the brazing oven 60. The CNC machine 10 has a base 11 that is fitted with a table 18 on which a stack of heat transfer plates 101 may be arranged. The table 18 is in turn arranged on a piston 19 that may lower the table 18 and thus lower the stack of heat transfer plates 101 that is located on the table 18. The piston 19 may stepwise lower the table 18 in a vertical direction D such that an uppermost heat transfer plate of the stack of heat transfer plates 101 is, in the vertical direction D, aligned with a support 20 that holds the stack of heat transfer plates 101 fix in horizontal directions. The fixing in horizontal directions is accomplished by virtue of a frame formed in the support, which frame also form an opening of a void 17 into which the table 18 may be lowered (in Fig. 1 the piston 19, the table 18, the void 17 and the support are shown in cross-section). In the illustrated embodiment, a Cartesian coordinate system 50 has an x-axis (x) and an y-axis (y) that define the horizontal directions and a z-axis (z) that defines the vertical direction D. The piston 19 may, after being lowered, rise the table 18 until it is parallel to the support 20.

The CNC machine 10 has an arm 12 that extends from the base 11 and above the table 18. A sleigh 13 is moveable along the arm 12 in the x-direction and supports a carrier 14 that is moveable in the y-direction relative the sleigh 13. The carrier 14 includes a piston that may move an ejector unit 16 and a gripping tool 15 in the z-direction. Thus, the ejector unit 16 and the gripping tool 15 are each moveable in the x- y- and x-directions relative the support 20 and the table 18.

A light source 30 is arranged above the base 11 and is directed such that it emits light towards the stack of heat transfer plates 101 that is arranged on the table 18. The light emitted from the light source 30 is typically ultraviolet (UV) light, such as UV-A light with a wavelength range of 320-400 nm. The light source 30 may be embodied as e.g. a mercury-vapor lamp that emits UV-A light.

A sensor 31 in form of a light detector is arranged above the base 11 and has a detection area that covers an extension the stack of heat transfer plates 101 has in the x-direction and y-direction when fixed by the support 20. The sensor 31 may, for example, have the form of a conventional photodetector like a charge-coupled device, photoresistor and photovoltaic cell. In any case, the sensor 31 should be configured to register fluorescent light that is emitted by a fluorescent substance in response to an illumination by the light source 30. For the fluorescent substance discussed below, the emitted light is within the visible wavelength and the sensor 31 is thus arranged to detect visible light with a wavelength of about 390 - 750 nm.

The ejector unit 16 has a number of nozzles that are capable of ejecting paste-like substances on objects that are located on the table 18. The gripping tool 15 has a number of suction cups or similar types of vacuum nozzles that are capable of lifting heat transfer plates from a source of heat transfer plates (not shown) and release them on the table 18 or on another object that is already present on the table 18.

The brazing oven 60 is arranged adjacent the CNC machine 10 and is fitted with an arm 61 that has a lift tool 62 capable of gripping the stack of heat transfer plates 101 when the stack 101 is arranged on the table 18. For this purpose walls that form the void 17 may have slots (not shown) capable of receiving the lift tool 62 such that it may properly grip the stack of heat transfer plates 101. The arm 61 may then insert the stack of heat transfer plates 101 into the brazing oven 60 via an oven opening (not shown).

The control unit 40 comprises a central processing unit (CPU) 41 that is connected to and controls an input/output device 42. The input/output device 42 is in turn connected to the CNC machine 10 and is connected (not shown) to the brazing oven 60. The CPU 41 is a central processing unit or microprocessor of a conventional type and represents a portion of the control unit 40 that is capable of carrying out instructions of a computer program, and is the primary element carrying out the functions of the control unit 40.

A computer readable medium 43 (also referred to as a memory unit) in the form of e.g. a flash memory, a hard disk or an EEPROM (Electronically Erasable Programmable Read-only Memory) is connected to the CPU 41, and a computer program having software instructions implementing one or more software applications are stored on the computer readable medium 43. The computer readable medium 43 may store various data and control parameters, and the software instructions 43 typically include software instructions that initiates various steps of the method of joining heat transfer plates as described herein. The software instructions include modules for controlling the CNC machine 10 and the brazing oven 60, and for receiving from the sensor 31 a signal that represent a pattern of light detected or registered by the sensor 31. A further module included in the software instructions allows the control unit 40 to use the CPU 41 for comparing a pattern of light registered by the sensor 31 with a reference pattern.

The control unit 40, the CNC machine 10 and the brazing oven 60 are in addition implemented according to common standards within the field of industrial control and industrial communication. Also, the control unit 40 may comprise a programmable interface that allows an operator to input in the memory unit 43 various operation parameters for the CNC machine 10 and for the brazing oven 60. The software instructions, i.e. a computer program code for carrying out the operations of the control unit 40 may for development convenience be written in a high-level programming language such as Java, C, and/or C++ but also in other programming languages, such as, but not limited to, interpreted languages. Some modules or routines for the operation of the control unit 40 may be written in assembly language or micro-code to enhance performance and/or memory usage. It will be further appreciated that the various functional steps and operations performed by the control unit 40 may be implemented by using one or more components like various control and processor units, memory units, discrete hardware components, application specific integrated circuits, signal processors or microcontrollers. Such components may be physically located in any of the control unit 40, the CNC machine 10 and/or the brazing oven 60. Thus, the control unit 40 should not necessarily be seen as a stand-alone unit but rather as a general control arrangement that implements the functionally described herein. The control per se of the CNC machine 10 and the brazing oven 60 is implemented according to conventional techniques and communication protocols.

With reference to Fig. 2 a heat transfer plate 102 is shown from above. The heat transfer plate 102 is of a type that may stacked with other, similar heat transfer plates such that the plates form a stack like the stack of heat transfer plates 101 illustrated in Fig. 1. The heat transfer plate 102 has a rounded, rectangular shape with a first long side 111, a second long side 112, a first short side 113, a second short side 114 and four rounded corners. This is a common shape for a heat transfer plate even though other shapes are just as feasible when implementing the iron-based brazing composition and method described herein. An inlet port 103 for a first fluid and an outlet port 106 for a second fluid is arranged a the first short side 113 while an outlet port 104 for the first fluid and an inlet port 105 for the second fluid is arranged at the second short side 114. A heat transfer area with elevations 107 and depressions 108 is arranged intermediate the short sides 113, 114. The heat transfer plate 102 is made of a iron-based material, such as stainless steel.

An iron-based brazing composition 121 -124 has been ejected on the heat transfer plate 102, such that the ejected brazing composition comprises a loop 121 at a periphery 110 of the heat transfer plate 102 and a number of strings 122 arranged between the two long sides 111, 112. The strings 122 are here arranged in the y-direction but may also be arranged in the x-direction or oblique to the x- or y-direction. For a last heat transfer plate of the stack of heat transfer plates 101 the brazing composition is ejected around the four ports 103-106, typically in form rings 123. For every heat transfer plate of the stack of heat transfer plates 101 but for a last heat transfer plate the brazing composition is ejected in form of strings 124 between ports 103, 106 respectively ports 104, 105.

The brazing composition is, as indicated, an iron-based brazing composition. Since it is iron-based is has e.g. wetting properties that are different from other types of brazing compositions and a method by which it is applied on a heat transfer plate must be uniquely established to in order to accomplish cost-efficient and reliable joining by brazing. Thus, the method described herein has been optimized for a certain type of iron-based brazing composition. In detail, the brazing composition comprises an alloy which contains i) 9 - 30 wt% Cr, ii) 0 - 5.0 wt% Mn, iii) 0 - 30 wt% Ni, iv) 0 - 12 wt% Mo, v) 0 - 1 wt% N, vi) 1 - 20 wt% Si in an amount effective to lower a temperature at which brazing takes place, vii) 0 - 4 wt% Cu, viii) optionally 0 - 2.5 wt% of one or more of elements selected from a group consisting of C, V, Ti, W, Al, Nb, Hf and Ta, ix) 0 - 2 wt% B, or 0 - 15 wt% P, and x) Fe in an amount that balances the alloy, and small inevitable amounts of contaminating elements such as S or oxygen O. The brazing composition further comprises a binder system for allowing the brazing composition to be applied on a surface by ejection, and a fluorescent substance, for allowing verification of a pattern by which the brazing composition is applied or ejected on the heat transfer plate.

The binder system may comprise water and any one of 1-5 wt% isopropanol, 1-10 wt% butyl glycol and 1-10 wt% ethanol. The purpose of the binder system, which may also be referred to as a binder matrix or binder material, is to give the brazing composition a paste-like form that allows the brazing composition to be ejected as strings on a surface. Typically, the amount of binder system in the brazing composition may be empirically determined by gradually increasing its amount until the brazing composition has a suitable paste-like composition. The brazing composition may still be somewhat "liquid" in the sense that it may spread out over the surface to some extent after it has been ejected. However, the brazing composition should not be liquid to an extent that it flows over e.g. an edge of the heat transfer plate 102. As indicated, the binder system may be an aqueous binder system but may also be an organic binder system. The organic binder system may be oil-based and may include polymers such as poly (met) acrylate among others, or biopolymers such as cellulose derivatives, starches, waxes, etc. The binder system evaporates when the heat transfer plate 102 is heated during brazing.

The fluorescent substance comprises an aromatic sulphonic acid or salt. In detail, the fluorescent substance may comprise trisodium 8-hydroxypyrene-1,3,6-trisulfonate (IUPAC name), with a formula of C₁₆H₇Na₃O₁₀S₃ and a CAS Registry Number of 6358-69-6. The purpose of the fluorescent substance is to allow the sensor to 31 register a pattern the brazing composition has after it has been ejected on the heat transfer plate 102. Since the fluorescent substance is fluorescent, the brazing composition emits light when it is illuminated by the light source 30. For the described embodiment, the light source 30 emits UV-A light with a wavelength of 320-400 nm and the fluorescent substance emits, in response to the illumination by the light source 30, light within a wavelength of about 390 - 750 nm. The fluorescent substance evaporates when the heat transfer plate 102 is heated during brazing.

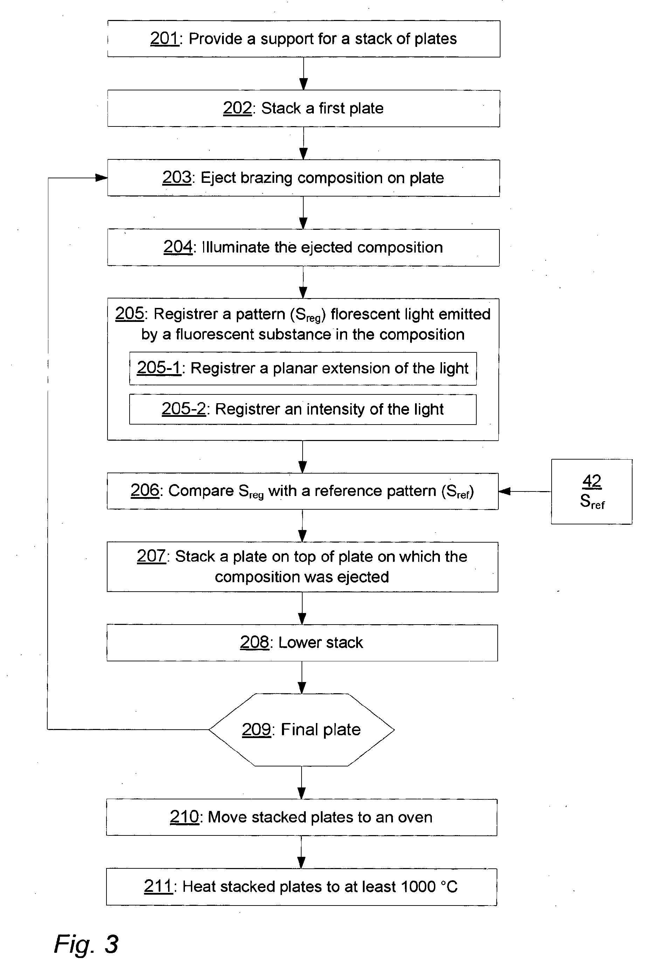

With reference to Fig. 3 a method of joining the stack of heat transfer plates 101 with the described iron-based brazing composition is illustrated. The individual heat transfer plates in the stack of heat transfer plates 101 may correspond to the heat transfer plate 102 of Fig. 2.

In a first step 201 the control unit 40, the CNC machine 10 and the brazing oven 60 are provided as described above, which includes providing the support 20 for the stack of heat transfer plates 101. The support 20 is accomplished by the table 18 as well as by the sides that form the void 17 in the base, which together fix the stack of heat transfer plates 101 in the x-, y- and z-directions. The first step 201 is typically performed once, i.e. when the control unit 40, the CNC machine 10 and the brazing oven 60 are set up for the first time.

In a next step 202 a first heat transfer plate is stacked on the table 18. This plate may be a so called end-plate with shape and properties that are different from subsequent heat transfer plates that form part of the stack of heat transfer plates 101. However, the first plate may also be identical to subsequently stacked heat transfer plates. The stacking is per se performed by the gripping tool 15 on the CNC machine 10.

Next, a number of steps are iteratively performed until a predetermined number N of heat transfer plates have been stacked. Often, 10-150 heat transfer plates are stacked, which means that the iteration is performed 9-149 times. Of course, fewer or more than 10-150 heat transfer plates may be stacked.

In a first step 203 of the iteration the iron-based brazing composition 121 - 124 is ejected in a predetermined pattern Sₚᵣₑ on the heat transfer plate that is arranged on the table 18. Here, a "pattern" of a brazing composition describes a location of the brazing composition, and optionally also the amount of the brazing composition. Fig. 2 illustrates one example of a pattern, which is defined by the location of the brazing composition 121-124. The ejection is per se performed by the ejector unit 16 on the CNC machine 10. The predetermined pattern Sₚᵣₑ corresponds to the control parameters by which the CNC machine 10 is operated and may be stored e.g. in the memory unit 43 that is arranged in the control unit 40. In principle, Sₚᵣₑ indicates locations on the heat transfer plate where the iron-based brazing composition shall be ejected as well as the amount of brazing composition (gr/cm). The iron-based brazing composition may typically be ejected to form the loop 121 (see Fig. 2), the strings 122 between the sides and the strings 124 between the ports 103, 106 and 104, 105. However, during a last iteration, the strings 124 between the ports 103, 106 and 104, 105 are omitted while the rings 123 around the ports 103, 106, 104, 105 are ejected.

In a next step 204 of the iteration the ejected brazing composition is illuminated with UV-light L1 from the light source 30. As a result the fluorescent substance in the brazing composition emits fluorescent light L2, which typically is within the visible wavelength-range.

In a next step 205 of the iteration the sensor 31 registers a pattern S_{reg} of the fluorescent light L2 emitted by the fluorescent substance. For facilitating registration the CNC machine 10 may be arranged in a dark place such that the only light the sensor 31 may register comes from the fluorescent substance. The registration is sent in form of one or more signals to the control unit 40. The registering of the pattern of the fluorescent light may include registering 205-1 a planar extension, typically in the x- and y-directions, of the light emitted from the fluorescent substance. To obtain an even more accurate result, the registering of the pattern of the fluorescent light may comprise registering 205-2 an intensity of the light emitted from the fluorescent substance.

In a next step 206 of the iteration the registered pattern S_{reg} is compared with a reference pattern S_{ref}. This may be done by the control unit 40 by retrieving the reference pattern S_{ref} from the memory unit 43 and by numerically mapping the registered pattern S_{reg} on the reference pattern S_{ref}. The reference pattern S_{ref} may be the same pattern as the predetermined pattern Sₚᵣₑ or may be a pattern that includes a suitable tolerance.

The comparison may, for example, include applying linear algebra to define vectors that represent the patterns S_{reg} and S_{ref} and give sections of each vector a weight value that indicates a thickness of the vector. In this case a length and direction of each vector is obtained by the registration of the planar extension of the light L2 emitted from the fluorescent substance. Weight values of the vectors are obtained by the registration of the intensity of the light L2 emitted from the fluorescent substance. By virtue of the comparison, a location and an amount of the brazing composition on the heat transfer plate 101 may be evaluated. Typically, the support 20 for holding the stack of heat transfer plates 101 may be used as a reference point when comparing the registered pattern S_{reg} with the reference pattern S_{ref}. Of course, other principles for comparing the patterns S_{reg} and S_{ref} may be used just as well.

As indicated, the comparison may include determining if the patterns S_{reg} and S_{ref} differ from each other beyond a predetermined, acceptable tolerance level. If this is the case, the method may be interrupted and a signal of warning may be sent to an operator. This is one example of an action that may be taken if the comparison shows unacceptable differences between patterns S_{reg} and S_{ref}. Other suitable actions may be taken, such as calling for calibration of the CNC machine 10 or initiating some fault tracing.

In a next step 207 a further heat transfer plate is stacked on top of the heat transfer plate on which the composition was ejected. The stacking is in this embodiment performed by the CNC machine 10 and the previously ejected brazing composition is then located between the plate on which it was ejected and the plate that was stacked on top.

In a next step 208 the stacked heat transfer plates are lowered in the direction D, which is parallel to a direction by which the heat transfer plates are stacked. The lowering is accomplished by the piston 19 and may be performed either before or after the step 207 of stacking the next heat transfer plate. The distance by which the stacked heat transfer plates 101 are lowered corresponds to the increase in height obtained every time a heat transfer plate is stacked on another heat transfer plate.

In a next step 209 it is determined if the predetermined number N of heat transfer plates have been stacked. If not, step 203 of ejecting the brazing composition is entered again which means that brazing composition is ejected on the last stacked heat transfer plate. Alternatively, if the iteration is performed for the last time, the last heat transfer plate that were stacked may be a so called end-plate that may have a different shape and properties than the other plates in the stack 101.

If the predetermined number plates have been stacked a next step 210 of moving the stacked plates to the brazing oven 60 is performed. This step 210 may be performed by employing conventional techniques.

In a final step 211 the plates are heated in the brazing oven 60 to a temperature of at least 1000 C°, which effectively joins the heat transfer plates in the stack 101. The end product obtained be the method may be a plate heat exchanger like the plate heat exchanger 130 shown in Fig. 4.

Various other suitable features may be implemented for any of the iron-based brazing composition and the method of joining the heat transfer plates, such as features described in patent documents EP1347859A1, EP1383624A1, EP1401610 A1, EP1888294A1, EP2081730A1 and EP2094431 A2, which all are incorporated by reference.

The employed iron-based brazing composition and the related method of joining heat transfer plates provide for assuring, by virtue of the ejection and the comparing of the registered pattern S_{reg} with the reference pattern S_{ref}, that a uniform quality of the brazed heat transfer plates may be obtained. Generally, if the comparison shows undesired differences, operations may be stopped and machines may be recalibrated such that the iron-based brazing composition always is applied on the plates in a desired pattern that provides a high brazing quality. As indicated, the described method has proven highly efficient in terms of controlling that an iron-based brazing composition is properly applied.

From the description above follows that, although various embodiments of the invention have been described and shown, the invention is not restricted thereto, but may also be embodied in other ways within the scope of the subject-matter defined in the following claims. For example, the method is not limited to performing the various steps in the described order. Also, other principles than those described herein may be employed for comparing a registered pattern with a reference pattern.

## Claims

1. An iron-based brazing composition comprising
- an alloy which contains
i. 9 - 30 wt% chromium (Cr),
ii. 0 - 5 wt% manganese (Mn),
iii. 0 - 30 wt% nickel (Ni),
iv. 0 - 12 wt% molybdenum (Mo),
v. 0 - 1 wt% nitrogen (N),
vi. 1 - 20 wt% silicone (Si) in an amount effective to lower a temperature at which brazing takes place,
vii. 0 - 4 wt% copper (Cu),
viii. optionally 0 - 2.5 wt% of one or more of elements selected from a group consisting of carbon (C), vanadium (V), titanium (Ti), tungsten (W), aluminum (Al), niobium (Nb), hafnium (Hf) and tantalum (Ta),
ix. 0 - 2 wt% boron (B) or 0 - 15 wt% phosphorus (P), and
x. iron (Fe) in an amount that balances the alloy, and small inevitable amounts of contaminating elements such as sulphur (S) or oxygen (O),
**wherein** the brazing composition comprises
- a binder system for allowing the brazing composition to be applied on a surface by ejection, and
- a fluorescent substance, for allowing verification of a pattern of applied brazing composition,
wherein the fluorescent substance comprises an aromatic sulphonic acid, or an aromatic sulphonic salt, or trisodium 8-hydroxypyrene-1,3,6-trisulfonate.

2. An iron-based brazing composition according to any one of claims 1 - 4, wherein the binder system comprises water and any one of 1-5 wt% isopropanol, 1-10 wt% butyl glycol and 1-10 wt% ethanol.

3. A method of joining heat transfer plates (101) with an iron-based brazing composition (121 - 124) according to any one of claims 1 - 5, the method comprising
- iteratively (209), until a predetermined number (N) of heat transfer plates have been stacked,
• ejecting (203) the brazing composition (121- 124) in a predetermined pattern (Sₚᵣₑ) on a heat transfer plate (102),
• illuminating (204) the ejected composition (121- 124) with light (L1) from a light source (30), such that the fluorescent substance in the composition (121 - 124) emits fluorescent light (L2) in response to the illumination,
• registering (205) with a sensor (31) a pattern (S_{reg}) of the fluorescent light (L2) emitted by the fluorescent substance in the composition (121 - 124),
• comparing (206) the registered pattern (S_{reg}) with a reference pattern (S_{ref}), and
• stacking (207) a further heat transfer plate on top of the heat transfer plate on which the composition (121 -124) was ejected, and
- heating (211), when the predetermined number (N) of heat transfer plates have been stacked, the stacked heat transfer plates (101) to a temperature of at least 1000 °C, such that the stacked heat transfer plates (101) are joined by brazing.

4. A method according to claim 6, comprising, prior heating (211) the stacked heat transfer plates, moving (210) the stacked heat transfer plates (101) to a brazing oven (60).

5. A method according to claim 6 or 7, comprising, during the iteration (209) that is performed until the predetermined number (N) of heat transfer plates have been stacked, lowering (208) the stacked heat transfer plates (101) in a direction that is parallel to a direction (D) by which the heat transfer plates (101) are stacked.

6. A method according to any one of claims 6 - 8, comprising providing (201) a support (20) for holding a stack of heat transfer plates (101), wherein the support (20) is used as a reference point when comparing (206) the registered pattern (S_{reg}) with the reference pattern (S_{ref})

7. A method according to any one of claims 6 - 9, wherein the registering (205) of the pattern (S_{reg}) of the fluorescent light (L2) comprises registering (205-1) a planar extension of the light (L2) emitted from the fluorescent substance.

8. A method according to any one of claims 6 - 10, wherein the registering (205) of the pattern (S_{reg}) of the fluorescent light (L2) comprises registering (205-2) an intensity of the light (L2) emitted from the fluorescent substance.

9. A method according to any one of claims 6 - 11, wherein the ejecting (203) of the brazing composition (121 -124) comprises ejecting brazing composition (121) in form of a loop at a periphery (110) of the heat transfer plate (102).

10. A method according to any one of claims 6 - 12, wherein the ejecting (203) of the brazing composition (121 -124) comprises ejecting brazing composition (123) around four ports (103-106) of at least one heat transfer plate (102).

11. A method according to claim 13, wherein the ejecting (203) of the brazing composition (123) around the four ports (103-106) is performed only for a last heat transfer plate on which the brazing composition (121 - 124) is ejected.

12. A method according to any one of claims 6-14, wherein the ejecting (203) of the brazing composition (121 - 124) comprises ejecting brazing composition (124) between an inlet port (103) for a first fluid and an outlet port (106) for a second fluid, the inlet port (103) and outlet port (106) being formed in a heat transfer plate (102) of the stacked heat transfer plates (101).

## Patentansprüche

1. Hartlötzusammensetzung auf Eisenbasis, umfassend
- eine Legierung, die Folgendes enthält
i. 9 - 30 Gew.-% Chrom (Cr),
ii. 0 - 5 Gew.-% Mangan (Mn),
iii. 0 - 30 Gew.-% Nickel (Ni),
iv. 0 - 12 Gew.-% Molybdän (Mo),
v. 0 - Gew.-% Stickstoff (N),
vi. 1 - 20 Gew.-% Silicium (Si) in einer Menge, die wirksam ist, eine Temperatur zu reduzieren, bei der das Hartlöten erfolgt,
vii. 0 - 4 Gew.-% Kupfer (Cu),
viii. wahlweise 0 - 2,5 Gew.-% eines oder mehrerer Elemente ausgewählt aus einer Gruppe bestehend aus Kohlenstoff (C), Vanadium (V), Titan (Ti), Wolfram (W), Aluminium (Al), Niob (Nb), Hafnium (Hf) und Tantal (Ta),
ix. 0 - 2 Gew.-% Bor (B) oder 0 - 15 Gew.-% Phosphor (P) und
x. Eisen (Fe) in einer Menge, die die Legierung ausbalanciert, und geringe unvermeidliche Mengen verunreinigender Elemente wie Schwefel (S) oder Sauerstoff (O),
wobei die Hartlötzusammensetzung Folgendes umfasst:
- ein Bindemittelsystem zum Gestatten, dass die Hartlötzusammensetzung durch Ausstoßen auf eine Oberfläche aufgebracht wird, und
- eine fluoreszierende Substanz zum Gestatten der Verifizierung eines Musters einer aufgebrachten Hartlötzusammensetzung,
wobei die fluoreszierende Substanz eine aromatische Sulfonsäure oder ein aromatisches Sulfonsäuresalz oder Trinatrium-8-hydroxypyrol-1,3,6-trisulfonat umfasst.

2. Hartlötzusammensetzung auf Eisenbasis nach Anspruch 1, wobei das Bindemittelsystem Wasser und irgendeines von 1 - 5 Gew.-% Isopropan, 1 - 10 Gew.-% Butylglycol und 1 - 10 Gew.-% Ethanol umfasst.

3. Verfahren zum Verbinden von Wärmeübertragungsplatten (101) mit einer Hartlötzusammensetzung auf Eisenbasis (121 - 124) nach einem der Ansprüche 1 - 2, wobei das Verfahren Folgendes umfasst:
- iterativ (209), bis eine vorbestimmte Anzahl (N) von Wärmeübertragungsplatten gestapelt worden ist,
• das Ausstoßen (203) der Hartlötzusammensetzung (121 - 124) in einem vorbestimmten Muster (Sᵥₒᵣ) auf eine Wärmeübertragungsplatte (102),
• das Beleuchten (204) der ausgestoßenen Zusammensetzung (121 - 124) mit Licht (L1) aus einer Lichtquelle (30), derart, dass die fluoreszierende Substanz in der Zusammensetzung (121 - 124) fluoreszierendes Licht (L2) als Reaktion auf die Beleuchtung ausstrahlt,
• das Erfassen (205) mit einem Sensor (31) eines Musters (S_{erf}) des fluoreszierenden Lichts (L2), das durch die fluoreszierende Substanz in der Zusammensetzung (121 - 124) ausgestrahlt wird,
• das Vergleichen (206) des erfassten Musters (S_{erf}) mit einem Bezugsmuster (S_{bez}) und
• das Stapeln (207) einer weiteren Wärmeübertragungsplatte auf der Wärmeübertragungsplatte, auf die die Zusammensetzung (121 - 124) ausgestoßen worden ist und
- das Erhitzen (211), wenn die vorbestimmte Anzahl (N) von Wärmeübertragungsplatten gestapelt worden ist, der gestapelten Wärmeübertragungsplatten (101) auf eine Temperatur von mindestens 1000 °C, derart, dass die gestapelten Wärmeübertragungsplatten (101) durch Hartlöten verbunden werden.

4. Verfahren nach Anspruch 3, umfassend, vor dem Erhitzen (211) der gestapelten Wärmeübertragungsplatten, das Übertragen (210) der gestapelten Wärmeübertragungsplatten (101) zu einem Hartlötofen (60).

5. Verfahren nach Anspruch 3 oder 4, umfassend, während der Iteration (209), die durchgeführt wird, bis die vorbestimmte Anzahl (N) von Wärmeübertragungsplatten gestapelt worden ist, das Senken (208) der gestapelten Wärmeübertragungsplatten (101) in einer Richtung, die parallel zu einer Richtung (D) liegt, in der die Wärmeübertragungsplatten (101) gestapelt sind.

6. Verfahren nach einem der Ansprüche 3 - 5, umfassend das Bereitstellen (201) eines Trägers (20) zum Halten eines Stapels von Wärmeübertragungsplatten (101), wobei der Träger (20) als Bezugsstelle verwendet wird, wenn das erfasste Muster (S_{erf}) mit dem Bezugsmuster (S_{bez}) verglichen (206) wird.

7. Verfahren nach einem der Ansprüche 3 - 6, wobei das Erfassen (205) des Musters (S_{erf}) des fluoreszierenden Lichts (L2) das Erfassen (205-1) einer planaren Ausdehnung des Lichts (L2), das aus der fluoreszierenden Substanz ausgestrahlt wird, umfasst.

8. Verfahren nach einem der Ansprüche 3 - 7, wobei das Erfassen (205) des Musters (S_{erf}) des fluoreszierenden Lichts (L2) das Erfassen (205 - 2) einer Intensität des Lichts (L2), das aus der fluoreszierenden Substanz ausgestrahlt wird, umfasst.

9. Verfahren nach einem der Ansprüche 3 - 8, wobei das Ausstoßen (203) der Hartlötzusammensetzung (121 - 124) das Ausstoßen der Hartlötzusammensetzung (121) in Form einer Schleife an einer Peripherie (110) der Wärmeübertragungsplatte (102) umfasst.

10. Verfahren nach einem der Ansprüche 3 - 9, wobei das Ausstoßen (203) der Hartlötzusammensetzung (121 - 124) das Ausstoßen der Hartlötzusammensetzung (123) um vier Öffnungen (103 - 106) mindestens einer Wärmeübertragungsplatte (102) umfasst.

11. Verfahren nach Anspruch 10, wobei das Ausstoßen (203) der Hartlötzusammensetzung (123) um die vier Öffnungen (103 - 106) nur für eine letzte Wärmeübertragungsplatte durchgeführt wird, auf die die Hartlötzusammensetzung (121 - 124) ausgestoßen wird.

12. Verfahren nach einem der Ansprüche 3 - 11, wobei das Ausstoßen (203) der Hartlötzusammensetzung (121 - 124) das Ausstoßen der Hartlötzusammensetzung (124) zwischen eine Einlassöffnung (103) für ein erstes Fluid und eine Auslassöffnung (106) für ein zweites Fluid umfasst, wobei die Einlassöffnung (103) und die Auslassöffnung (106) in einer Wärmeübertragungsplatte (102) der gestapelten Wärmeübertragungsplatten (101) gebildet wird.

## Revendications

1. Composition de brasage à base de fer comprenant:
- un alliage qui contient
i. de 9 à 30% en poids de chrome (Cr),
ii. de 0 à 5% en poids de manganèse (Mn),
iii. de 0 à 30% en poids de nickel (Ni),
iv. de 0 à 12% en poids de molybdène (Mo),
v. de 0 à 1 % en poids d'azote (N),
vi. de 1 à 20% en poids de silicium (Si) en quantité efficace pour abaisser la température à laquelle le brasage est effectué,
via. de 0 à 4% en poids de cuivre (Cu),
viii. facultativement, de 0 à 2,5% en poids d'un ou de plusieurs éléments choisis dans un groupe comprenant le carbone (C), le vanadium (V), le titane (Ti), le tungstène (W), l'aluminium (Al), le niobium (Nb), le hafnium (Hf) et le tantale (Ta),
ix. de 0 à 2% en poids de bore (B) ou de 0 à 15% en poids de phosphore (P) et
x. du fer (Fe) en quantité complétant l'alliage, ainsi que d'inévitables petites quantités d'éléments contaminants tels que le soufre (S) ou l'oxygène (O),
la composition de brasage comprenant
- un système de liant pour permettre l'application de la composition de brasage sur une surface par éjection et
- une substance fluorescente pour permettre la vérification d'un motif de composition de brasage appliquée,
la substance fluorescente comprenant un acide sulfonique aromatique ou un sel sulfonique aromatique ou du 8-hydroxypyrène-1,3,6-trisulfonate de trisodium.

2. Composition de brasage à base de fer selon la revendication 1, dans laquelle le système de liant comprend de l'eau et l'un quelconque des éléments parmi l'isopropanol à raison de 1 à 5% en poids, le butyl glycol à raison de 1 à 10% en poids et l'éthanol à raison de 1 à 10% en poids.

3. Procédé d'union de plaques de transfert de chaleur (101) avec une composition de brasage à base de fer (121-124) selon l'une quelconque des revendications 1-2, le procédé comprenant
- la répétition (209), jusqu'à ce qu'un nombre (N) prédéterminé de plaques de transfert de chaleur ait été empilé, des opérations suivantes:
• éjecter (203) la composition de brasage (121-124) suivant un motif prédéterminé (Sₚᵣₑ) sur une plaque de transfert de chaleur (102),
• éclairer (204) la composition (121-124) éjectée avec une lumière (L1) émise par une source lumineuse (30), de sorte que la substance fluorescente dans la composition (121-124) émette une lumière fluorescente (L2) en réponse à l'éclairage,
• enregistrer (205) au moyen d'un capteur (31) un motif (S_{reg}) de la lumière fluorescente (L2) émise par la substance fluorescente dans la composition (121-124),
• comparer (206) le motif enregistré (S_{reg}) à un motif de référence (S_{ref}) et
• empiler (207) une nouvelle plaque de transfert de chaleur sur le dessus de la plaque de transfert de chaleur sur laquelle la composition (121-124) a été éjectée et
- chauffer (211), lorsque le nombre (N) prédéterminé de plaques de transfert de chaleur a été empilé, les plaques de transfert de chaleur empilées (101) à une température d'au moins 1 000°C, de façon que les plaques de transfert de chaleur empilées (101) soient unies par brasage.

4. Procédé selon la revendication 3, comprenant, avant de chauffer (211) les plaques de transfert de chaleur empilées, le déplacement (210) des plaques de transfert de chaleur empilées (101) vers un four de brasage (60).

5. Procédé selon la revendication 3 ou 4, comprenant, pendant la répétition (209) qui a lieu jusqu'à ce que le nombre (N) prédéterminé de plaques de transfert de chaleur ait été empilé, l'abaissement (208) des plaques de transfert de chaleur empilées (101) dans une direction qui est parallèle à une direction (D) d'empilement des plaques de transfert de chaleur (101).

6. Procédé selon l'une quelconque des revendications 3-5, comprenant la fourniture (201) d'un support (20) pour maintenir une pile de plaques de transfert de chaleur (101), le support (20) étant utilisé comme point de référence lors de la comparaison (206) du motif enregistré (S_{reg}) avec le motif de référence (S_{ref}).

7. Procédé selon l'une quelconque des revendications 3-6, dans lequel l'enregistrement (205) du motif (S_{reg}) de la lumière fluorescente (L2) comprend l'enregistrement (205-1) d'une extension planaire de la lumière (L2) émise par la substance fluorescente.

8. Procédé selon l'une quelconque des revendications 3-7, dans lequel l'enregistrement (205) du motif (S_{reg}) de la lumière fluorescente (L2) comprend l'enregistrement (205-2) d'une intensité de la lumière (L2) émise par la substance fluorescente.

9. Procédé selon l'une quelconque des revendications 3-8, dans lequel l'éjection (203) de la composition de brasage (121-124) comprend l'éjection de la composition de brasage (121) sous forme d'une boucle au niveau d'un contour (110) de la plaque de transfert de chaleur (102).

10. Procédé selon l'une quelconque des revendications 3-9, dans lequel l'éjection (203) de la composition de brasage (121-124) comprend l'éjection de la composition de brasage (123) autour de quatre orifices (103-106) d'au moins une plaque de transfert de chaleur (102).

11. Procédé selon la revendication 10, dans lequel l'éjection (203) de la composition de brasage (123) autour des quatre orifices (103-106) est réalisée seulement pour une dernière plaque de transfert de chaleur sur laquelle la composition de brasage (121-124) est éjectée.

12. Procédé selon l'une quelconque des revendications 3-11, dans lequel l'éjection (203) de la composition de brasage (121-124) comprend l'éjection de la composition de brasage (124) entre un orifice d'entrée (103) pour un premier fluide et un orifice de sortie (106) pour un second fluide, l'orifice d'entrée (103) et l'orifice de sortie (106) étant formés dans une plaque de transfert de chaleur (102) des plaques de transfert de chaleur empilées (101).
